# EUROPEAN PATENT SPECIFICATION

(11) **EP 2 482 063 B1**
(45) Date of publication and mention of the grant of the patent: **20.11.2013**
(21) Application number: 12152349.2
(22) Date of filing: 24.01.2012
(51) Int. Cl.: G01N 27/404

(54) **Electrochemical oxygen sensor with internal barrier to oxygen diffusion**
Elektrochemischer Sauerstoffsensor mit interner Sauerstoffdiffusionsbarriere
Capteur d'oxygène électrochimique avec barrière interne de diffusion d'oxygène

(30) Priority: 27.01.2011 US 201161436912 P; 20.01.2012 US 201213354950
(43) Date of publication of application: 01.08.2012
(73) Proprietor: Life Safety Distribution AG, 8610 Uster (CH)
(72) Inventor: Tillotson, John Anthony, Morristown, NJ 07962-2245 (US); McLeod, Ian Andrew, Morristown, NJ 07962-2245 (US); Chapples, John, Morristown, NJ 07962-2245 (US)
(74) Representative: Buckley, Guy Julian

(56) References cited:
- EP-A2- 0 239 190
- DE-A1-102008 024 392
- GB-A- 2 218 525
- US-A- 3 785 948
- US-A- 4 522 690
- US-A- 4 911 819
- US-A1- 2008 202 929

## Description

### FIELD

The invention pertains to electrochemical gas sensors. More particularly, the invention pertains to electrochemical oxygen sensors which are resistant to internal oxygen diffusion.

### BACKGROUND

Electrochemical sensors are known and can be used to detect various types of gases including oxygen as well as other types of gases.

Representative sensors have been disclosed in US Patents No. 5,668,302 to Finbow et al. entitled Electrochemical Gas Sensor Assembly, issued Sept 16, 1997, and No. 5746,899 to Finbow et al. entitled Electrochemical Gas Sensor, issued May 5, 1998. Useful as they have become, such sensors are not without some limitations.

There is a general requirement to control / prevent bulk gas flow within a sensor. Such flow can be generated by a number of circumstances - e.g., thermal, pressure or mechanical shock can all cause displacements potentially leading to undesirable bulk gas movement. (These are undesirable in the sense that gas may reach parts of the sensor via routes which do not form part of the design intent and which can therefore lead to erroneous sensor outputs)

A particular problem experienced by users of portable oxygen gas detection equipment is that the instrument can be susceptible to failure modes associated with thermal, mechanical or pressure shock. Such instruments can generate unstable sensor outputs, or in certain circumstances false alarms should the shock be of sufficient magnitude. Temperature shock is exhibited most frequently when the instrument is subjected to rapid changes in temperature. A typical instance when this might occur would be when the user exits a heated office or calibration station into a cold working environment.

This situation is most noticeable in winter when temperature differences are at their greatest. While the effect is often associated with a negative temperature change, i.e. movement from a warm to cooler environment, the same effect can also manifest itself in the opposite sense when there is a positive temperature change. One solution to this problem has been disclosed in the specification of a U.S. Patent Application No. 11/877,331 entitled "Gas Sensors" filed October 23, 2007 and published as No. 2008-0202929.

The bulk flow of air from within the cell to the environment or vice versa is understood to be the cause of the signal instability when the sensor is exposed to shock. The caustic environment of the electrolytes that are widely used within such sensors limits the identification and selection of inert materials that will not interfere with normal operation of the respective sensor. There is a need to identify alternative materials to those that have been examined historically, with limited success (e.g. cellulose, Polycarbonate, Nylon,) due their poor chemical tolerance to the highly caustic environments created when the sensors are used across the specified environmental operating conditions.

Thus, there continues to be a need for improved oxygen sensors which minimize false alarms. Preferably such improved functionality could be achieved without substantially increasing the manufacturing complexity and cost of such units.

Also, it would be preferable if such improved detectors could be implemented as portable or human wearable to facilitate use.

### BRIEF DESCRIPTION OF THE DRAWINGS

Fig. 1 is a plan view of a sealing disk;

Fig. 2 illustrates a side elevational view of a sealing disk as in Fig. 1;

Fig. 2A is an enlarged partial view of an edge of the disk of Fig. 2;

Fig. 2B is an enlarged partial view of a central region of the disk of Fig. 2; and

Fig. 3 is an exploded view that illustrates the components of an oxygen cell according to one embodiment hereof.

### DETAILED DESCRIPTION

While embodiments of this invention can take many different forms, specific embodiments thereof are shown in the drawings and will be described herein in detail with the understanding that the present disclosure is to be considered as an exemplification of the principles of the invention, as well as the best mode of practicing same, and is not intended to limit the invention to the specific embodiment illustrated.

In embodiments hereof, the above noted problem can be solved by incorporating into an electrochemical sensor a material that maintains high ionic conductivity whilst creating an effective barrier for internal oxygen diffusion, and also maintains an effective pressure barrier between the Anode and Cathode. Whilst this application discloses using agar as an example, those of skill will understand that there are a number of other water soluble polymers that are usable. The material needs to possess sufficient solubility in the electrolyte within the sensor. The chosen polymer should be substantially chemically inert in the electrolyte environment.

As known from US 3785948, agar is an example of a naturally occurring polysaccharide polymer that meets these requirements. Other possible polysaccharides such as alginate, carrageenans, or xanthan would prove suitable. Equally guar gum or other industrial gums, and cellulose based polymers such as carboxymethyl, hydroxyethyl, methyl cellulose etc. There are also a number of synthetic water soluble polymers that might be suitable, these are well known and could include PVA, poly(HEMA), polyacrylamide and various substituted acrylamides. Previously cross-linked N-acryloyl-tris(hydroxymethyl)aminomethane has been used as a gelling material to prevent leakage of electrolyte and not incorporated into membrane separators.

Those of skill will also understand that other materials having the above characteristics are also usable without limitation. The type of gas being sensed is also not a limitation. The above noted polymers can be used, for example, in oxygen sensors without limitation.

One of the factors that is important in determining the choice of polymer is the ease of convenience of use in a manufacturing environment. Agar is particularly attractive since it is non toxic and does not require chemical polymerization steps such as would be required with some of the synthetic polymers.

Embodiments hereof include a material which is a 2% Agar gel. made from Agar powder of gel strength NLT 950 G/CM2 (1.5% gel NIKAN TEST). A dry agar powder, Molecular Weight (C12H18O9)n, is dissolved in electrolyte at a temperature of greater than 85°C. The hot agar solution can then be used to impregnate any of the porous materials used within the sensor, or, cell. The agar will gel on cooling. Alternately, or in addition, various elements, without limitation, such as membranes or filters, can be impregnated with the gel prior to assembly and then incorporated when the cell is assembled.

A partition can be created in the cell that prevents bulk flow or exchange of air between the cell and the environment. The partition can include a micro-porous plastic membrane supported on a perforated plastic disk.

The disk serves a number of functions. The primary role is to support the membrane.

An optional, compressible foam gasket, supported by the disk, can be included and can serve two purposes. The adhesive surfaces ensure an air tight seal between the supporting shelf and the membrane material; in addition the compressible nature of the material ensures that any "dead volume" in the upper partition is minimized. The amount of free "dead volume" in the upper partition is associated with the size of the initial thermal transient that all lead based oxygen sensors show on rapid changes of temperature.

The disk can be annular with a hole in the middle to allow electrolyte ions to pass through the partition between the upper and lower compartments of the cell thereby facilitating normal operation of the cell. Alternatively the single central hole in the disk could be replaced with a plurality of smaller holes, each also capable of allowing electrolyte transport across the disk to the electrode from the main body of the cell.

The membrane is adequately supported so as not to deform or flex under pressure, since this behavior can also generate pressure transient effects of sufficient magnitude to cause false alarms. The function of the micro-porous membrane is to prevent the bulk transport of gas (usually in the form of bubbles) through the cell.

Embodiments of the invention include a micro-porous plastic membrane material. The membrane material is not swelled or deformed by electrolyte, nor chemically degraded by electrolyte, or reaction products of oxygen reduction. The micro-pores in the membrane also allow transport of ions through the film unlike some solid membranes which only allow water migration.

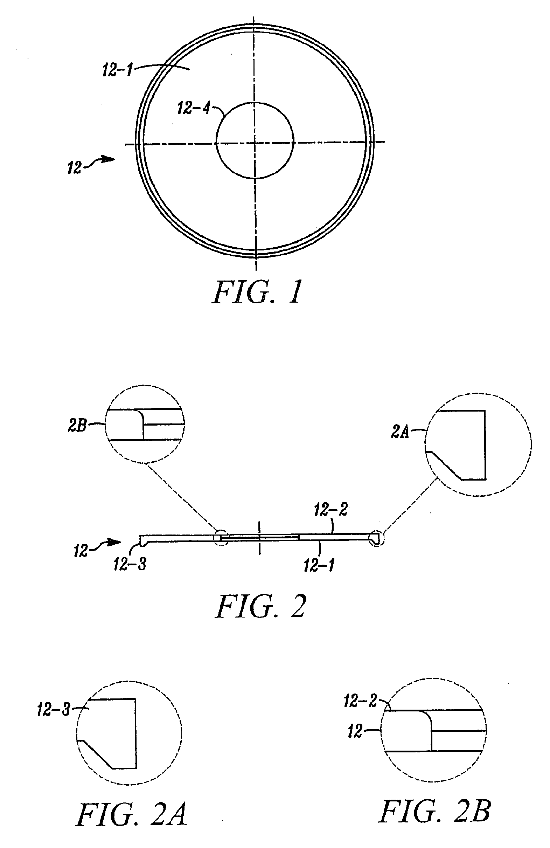

Use of a plastic support disk, or plate, as in Fig. 1, which can be ultrasonically welded to a cell body to provide air tight seal with the body and current collector, improves cell reliability and life-time. The disk also stops the membrane from flexing under pressure. Use of a compressible gasket minimizes "dead volume" in a cap or cover for the cell thereby reducing initial thermal transient effects.

Figs. 1, 2-2B illustrate various aspects of a disk or partition 12 in accordance herewith. As illustrated therein, disk 12 is a rigid, generally annular shaped member with first and second spaced apart planar surfaces 12-1, 12-2 bounded by a peripheral support 12-3. The disk 12 has a central opening 12-4. The disk 12 carries a selected micro-porous plastic membrane 16.

The disk 12 can be ultrasonically welded to an external housing of a respective oxygen sensor. As will be understood by those of skill in the art, disk 12 could alternately be perforated by one or more openings therethrough. The openings need not be centrally located, but could be distributed across the disk.

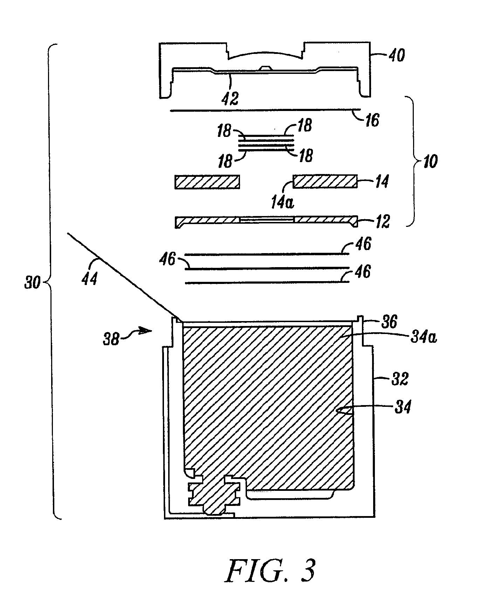

Fig. 3 is an exploded view of a representative oxygen sensor 30 which embodies the present invention. The cell 30 includes a hollow, cylindrical body 32 which defines an interior region 34 for an electrolyte 34a for the cell.

A top end 36 of the body 32 defines an annular region indicated generally at 38 which can receive and support a multiple element separator filter 10.

The disk 12 as previously discussed, is supported by the annular surface 38 and can be ultrasonically welded to the body 32.

Membrane 16 overlays the disk 12. The cell 30 is closed with a cap 40 which could be affixed to the body 32 by welding or adhesive. The cap 40 can carry a working electrode 42. The body 32 can carry an internal current collector element 44.

In one aspect, the agar powder, when dissolved in the hot electrolyte, and after injection into the housing 32, can permeate through the disk 12 and into contact with gasket 14, membrane 16, and working electrode 42. When the temperature of the electrolyte 34a cools, the agar jells providing an internal oxygen diffusion barrier wherever it is located in the sensor. Alternately, elements such as 16, 18, and 46 can be impregnated with a selected gel before assembly and incorporated when the cell is assembled.

In assembling one embodiment of the present invention, as in Fig. 3, members of a plurality of separator filters 46 are located centrally on the top 36 of the cell body molding 32.

The plastic disk, 12, as in Fig. 1 for example, is then placed centrally within the recess 38 of the body molding 32 on top of the separator filters 46 ensuring that the internal current collector 44 is located between the plastic sealing disc 12 and body molding 32. The disc 12 is then ultrasonically welded to the body molding 32.

The micro-porous membrane 16 is located centrally on top of the disk 12. One exemplary material for the membrane 16 is nylon. Other micro-porous materials, without limitation, could be used instead of nylon as would be understood by those of skill in the art.

An optional, compressible foam adhesive gasket 14, also annular in shape, having a central opening 14a, overlays and is supported by the disk 12. Filter 18 fills the opening 14a of the gasket 14. Where gasket 14 is not used, the membrane 16 can be placed directly on and in contact with the disk 12.

The internal current collector 44 is then folded over the membrane 16. The pre-assembled cap molding 40 and working electrode 42 is then placed on to the cell body assembly 32 and ultrasonically welded into place to complete cell 30.

Embodiments hereof prevent oxygen diffusion within an oxygen cell by providing a gel-based barrier to internal oxygen diffusion while still maintaining an effective pressure barrier between the electrodes. This in turn minimizes thermal shocks. Similar configurations can be used in cells which sense other gases.

Also, by using a plastic disc such as disk 12 as a support for membrane 16 and welding the disc to the body 32 of the oxygen cell such as cell 30 it is possible to create a gas tight seal between upper and lower parts of the cell and further reduce thermal shock effects that are caused by transfer of gas between the two parts.

In summary, a gel/electrolyte combination offering good adhesive / flowing /sealing properties can offer major benefits to the cell designer in terms of controlling in-cell bulk gas flow whilst being fully compatible with the high ionic conductivity requirements of electrochemical operation.

## Claims

1. An electrochemical gas sensor (30) comprising:
a hollow housing (32) with an internal surface (34) which carries an electrolyte (34a) having a selected gel in contact with at least portions of the internal surface (34); and further comprising
a separator filter (46), a sealing member (12) with at least one opening (12-4) therethrough an overlaying filter (18) and an overlying micro-porous membrane (16) supported by the sealing member (12);
**characterised in that** the overlying micro-porous membrane (16) the separator filter (46), and the overlaying filter (18) are impregnated with the selected gel to provide an internal oxygen diffusion barrier.

2. An electrochemical gas sensor (30) as in claim 1 which includes sensing and counter electrodes (42, 44) wherein the electrodes are in contact with at least portions of the electrolyte and the gel, and wherein the gel is selected from a class which includes at least polysaccharides, industrial gums, or cellulose based polymers.

3. An electrochemical gas sensor (30) as in claim 1 where the micro-porous membrane (16) is positioned in the sensor between a counter electrode and a gas inflow port.

4. An electrochemical gas sensor (30) as in claim 3 which includes a compressible gasket (14) which carries the membrane (16).

5. An electrochemical gas sensor (30) as in claim 1 which includes a compressible foam adhesive gasket which carries the membrane (16).

## Patentansprüche

1. Elektrochemischer Gassensor (30), umfassend:
ein hohles Gehäuse (32) mit einer internen Oberfläche (34), die ein Elektrolyt (34a) trägt, das ein ausgewähltes Gel aufweist, das mit mindestens einigen Abschnitten der internen Oberfläche (34) in Kontakt steht; und ferner umfassend
einen Trennfilter (46), ein Abdichtelement (12) mit mindestens einer Öffnung (12-4), durch die ein darüberliegender Filter (18) und eine darüber liegende mikroporöse Membran (16) verlaufen, die von dem Abdichtelement (12) getragen werden;
**dadurch gekennzeichnet, dass** die mikroporöse Membran (16), die über dem Trennfilter (46) liegt, und der darüberliegende Filter (18) mit dem ausgewählten Gel imprägniert sind, um eine interne Sauerstoffdiffusionsbarriere bereitzustellen.

2. Elektrochemischer Gassensor (30) nach Anspruch 1, der Erfassungs- und Zählerelektroden (42, 44) aufweist, wobei die Elektroden mit mindestens einigen Abschnitten des Elektrolyts und Gels in Kontakt stehen, und wobei das Gel ausgewählt ist aus der Klasse, die mindestens Polysaccharide, Industriekautschuk oder zellulosebasierte Polymere enthält.

3. Elektrochemischer Gassensor (30) nach Anspruch 1, wobei die mikroporöse Membran (16) in dem Sensor zwischen einer Zählerelektrode und einem Gaseinlassanschluss angeordnet ist.

4. Elektrochemischer Gassensor (30) nach Anspruch 3, der eine zusammendrückbare Dichtung (14) aufweist, welche die Membran (16) trägt.

5. Elektrochemischer Gassensor (30) nach Anspruch 1, der eine zusammendrückbare Schaumstoffklebedichtung aufweist, welche die Membran (16) trägt.

## Revendications

1. Capteur électrochimique de gaz (30) comprenant :
un logement creux (32) doté d'une surface intérieure (34) qui porte un électrolyte (34a) présentant un gel sélectionné en contact avec au moins certaines parties de la surface intérieure (34) et comprenant en outre
un filtre de séparation (46),
un élément de scellement (12) traversé par au moins une ouverture (12-4) et
un filtre supérieur (18) recouvert par une membrane microporeuse (16) soutenue par l'élément de scellement (12),
**caractérisé en ce que**
la membrane microporeuse supérieure (16), le filtre de séparation (46) et la filtre supérieur (18) sont imprégnés du gel sélectionné de manière à établir une barrière à la diffusion d'oxygène interne.

2. Capteur électrochimique de gaz (30) selon la revendication 1, qui comprend une électrode de détection et une contre-électrode (42, 44), les électrodes étant en contact avec au moins certaines parties de l'électrolyte et du gel, le gel étant sélectionné dans un ensemble qui comprend au moins les polysaccharides, les gommes industrielles et les polymères à base de cellulose.

3. Capteur électrochimique de gaz (30) selon la revendication 1, dans lequel la membrane microporeuse (16) est disposée dans le capteur entre une contre-électrode et un orifice d'entrée de gaz.

4. Capteur électrochimique de gaz (30) selon la revendication 3, qui comprend un joint d'étanchéité (14) compressible qui porte la membrane (16).

5. Capteur électrochimique de gaz (30) selon la revendication 1, qui comprend un joint adhésif en mousse compressible qui porte la membrane (16).
